# EUROPEAN PATENT SPECIFICATION

(11) **EP 1 910 020 B1**
(45) Date of publication and mention of the grant of the patent: **13.01.2010**
(21) Application number: 06795117.8
(22) Date of filing: 11.07.2006
(51) Int. Cl.: B23Q 3/06, G05B 19/042

(54) **A DEVICE AND A METHOD FOR HOLDING WORKPIECES IN MACHINING OPERATIONS**
VORRICHTUNG UND VERFAHREN ZUM FESTHALTEN VON WERKSTÜCKEN BEI BEARBEITUNGSVORGÄNGEN
DISPOSITIF ET PROCÉDÉ POUR SUPPORTER DES PIÈCES À USINER DANS DES OPÉRATIONS D'USINAGE

(30) Priority: 22.07.2005 IT BO20050494
(43) Date of publication of application: 16.04.2008
(73) Proprietor: Jobs S.p.A., 29100 Piacenza (IT)
(72) Inventor: SCHIAVI, Bruno, I-29100 Piacenza (IT); FERRARI, Maurizio, I-26026 Pizzighettone (IT); FOLETTI, Sandro, I-29100 Piacenza (IT)
(74) Representative: Ghioni, Carlo Raoul Maria
(86) International application number: PCT/IB2006/001954
(87) International publication number: WO 2007/010355

(56) References cited:
- EP-A- 0 240 965
- EP-A- 0 768 586
- FR-A- 2 696 017
- GB-A- 2 052 642
- GB-A- 2 244 355
- JP-A- 60 121 302
- US-A- 5 722 646
- US-B1- 6 547 884
- US-B1- 6 578 399

## Description

### Technical Field

The present invention relates to a device and a method for holding workpieces during machining operations.

In particular, the invention finds application in the art field of devices employed in numerically controlled multi-axis machine tools for the purpose of supporting a semi-manufactured item or a blank in a stable position, so that the piece can be machined by the tool.

### Background Art

Conventionally, devices of the type in question appear as a simple deck on which the workpiece is rested and secured. In certain cases, especially when the workpiece is not flat, or in any event cannot be supported on a flat table, use is made of devices that are shaped to match the shape of the workpiece. In these instances, however, a different device will be needed every time there is a change of workpiece, with the result that a storage facility is needed to contain the various types of support devices and an extremely high production cost is incurred.

These drawbacks are addressed, by way of example, in devices and methods for holding a workpiece as disclosed in references US 5722646 and US 6209188, which teach the use of a support table affording an array of housings designed to accommodate a plurality of actuators. The actuators are raised and lowered to match the geometry of the workpiece, thus providing a flexible deck readily adaptable to the shape of any given item for machining.

In particular, such devices operate by addressing a set of commands selectively to each of the housings in the support table. The command addressed to a given housing, once received, is transferred to the actuator associated with the housing and thereupon executed by the selfsame actuator.

Notwithstanding such devices and methods are much more versatile than those based on the principle of shaping a table to match a particular workpiece, they are affected by certain drawbacks just the same, and their use consequently is not always troublefree.

In particular, should there be any kind of problem connected with recognition of the command or commands addressed to one of the housings, the support table must be dismantled so that the damaged housing can be inspected, and the damaged signal recognition unit repaired or replaced. Clearly, the device will remain out of service for as long as it may take to effect a repair, and stoppage times can therefore be lengthy.

In addition, and especially in the case where each housing is connected in parallel with the master control unit by which the commands are transmitted, the incorporation of all the necessary wiring into the support table is not easily accomplished.

Similarly, where the housings are connected in series with the master control unit transmitting the commands, each housing must be equipped with suitable electronic circuitry comprising a unit programmed to recognize the address associated with the commands. Since it is often the case, conversely, that not all of the housings in the table will need to be equipped with a relative actuator, the cost of assembling the device can be unnecessarily high.

The object of the present invention, accordingly, is to design a device and a method for holding workpieces in machining operations, such as will be unaffected by the drawbacks described above.

In particular, the object of the invention is to provide a device for holding workpieces in machining operations that will be exceptionally versatile and flexible.

It is also an object of the present invention to provide a device and a method for holding workpieces in machining operations, affording the advantages of low production and running costs.

### Disclosure of the Invention

The stated objects are substantially realized, according to the invention, in a device and a method for holing workpieces in machining operations as defined in claims 1 and 18.

The invention will now be described in detail, by way of example, with the aid of the accompanying drawings, in which:
- figure 1 is a first perspective view of a device for holding workpieces in machining operations, according to the present invention;
- figure 2 is a second perspective view of the device shown in figure 1;
- figure 3 is a block diagram illustrating the operation of the device shown in figure 1;
- figure 4 is a first sectional view illustrating a detail of the device shown in figure 1;
- figure 5 is a second sectional view of the detail shown in figure 3;
- figure 6 is a circuit diagram relative to a detail of the device for holding workpieces in machining operations.

With reference to the drawings, numeral 1 denotes a device, in its entirety, for holding workpieces in machining operations.

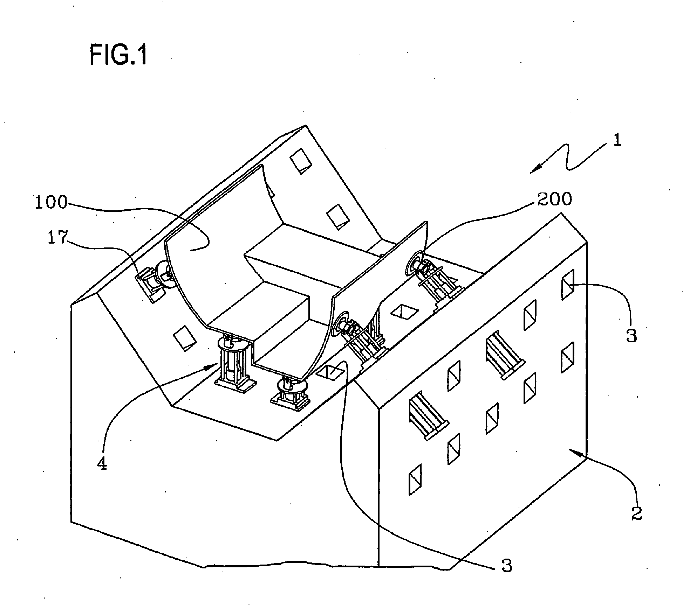

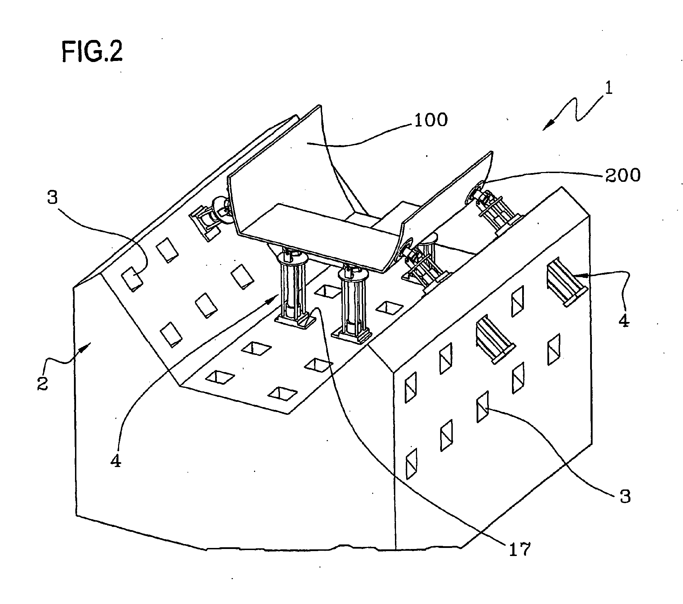

The device 1 comprises a support table 2 furnished with a plurality of housings 3, and a plurality of actuators 4 insertable removably in the housings 3 of the table 2. The actuators 4 can be made to assume a plurality of operating positions and are capable thus of combining to create a deck of which the shape can be matched to the contours of a workpiece 100, as illustrated in figures 1 and 2.

Numeral 5 denotes a master control unit by which signals composed of one or more identification codes and one or more commands inducing motion in the actuators 4 are generated and thereupon relayed to the support table 2, the composition of the signals being determined by the geometry of the workpiece.

Each single actuator 4 is associated with a unique identification code, in such a way that the signals generated by the master control unit 5 are receivable selectively by the actuators 4. In other words, each signal emitted by the control unit 5 is addressed directly to a given actuator 4 via the identification code embedded in the selfsame signal.

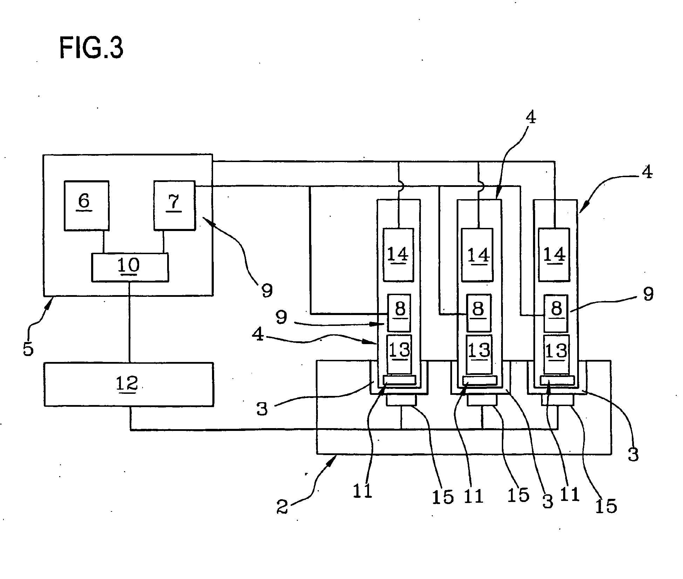

Referring to figure 3, in particular, the master control unit 5 comprises a first memory 6 in which a plurality of data sets are stored. Each data set refers to a particular workpiece and each data item defines the operating position that must be assumed by an actuator occupying a given housing 4. In logic terms, the first memory represents a computer file of workpieces, each one of which is attributed a final configuration that the deck must assume in order to match the shape of the selfsame piece.

To advantage, as already intimated, the data stored in the first memory 6 will define the locations of the housings 3. Accordingly, programming of the first memory 6 is made especially simple and intuitive, as no significance is given to the particular actuator 4 that may occupy a given housing 3.

More exactly, the first memory 6 can be programmed without any thought as to which of the actuators will physically execute the commands generated, but simply by informing the memory 6 that an actuator 4 must be extended to a predetermined height at a predetermined location on the support table 2.

In a preferred embodiment, the programming of the first memory 6, or rather the operation of storing a plurality of data sets, is effected automatically by interfacing the first memory 6 with a computer aided modelling program, so that when a workpiece is drawn, the dimensional characteristics will be transferred directly to the first memory 6. Alternatively, the memory 6 can be programmed by entering the single positional references for the workpiece one by one.

To advantage, the master control unit 5 further comprises a second memory 7 containing a conversion table in which the identification code of each actuator is paired with the location of a respective housing 3. In the preferred embodiment illustrated, the second memory 7 receives information from each actuator 4 installed on the support table 2. More precisely, when an actuator 4 is installed in a housing 3, the identification code of the actuator is communicated to the second memory 7, together with the code of the housing it occupies. The code is acknowledged by a reader unit 8, for example an optical bar code reader or a mechanical device utilizing microswitches, and associated with the information relative to the housing in question, whereupon the conversion table will be updated. The reader unit 8 and the second memory 7 together constitute self-learning means 9 serving to establish the identification code of each actuator 4. Alternatively, the identification code of each actuator 4 and the location of the relative housing 3 can be entered in the second memory 7 by an operator, using an alphanumeric type man-machine interface, for example.

The control unit 5 further comprises a processing unit 10 connected operationally to the first memory 6 and second memory 7. In particular, the processing unit 10 outputs motion-inducing signals on the basis of data stored in the first memory 6, self-evidently according to the geometry of the workpiece. Since the data in question will refer to the locations of the housings 3, as mentioned previously, the processing unit 10 advantageously can access the second memory 7 to convert the information reflecting the location of the housings 3 into codes identifying the actuators 4 occupying the housings. In this way, the processing unit 10 associates an identification code with each motion-inducing signal generated, serving as the address for the single actuator 4.

To enable acknowledgement of the signals intended for the single actuators 4, each actuator comprises means 11 by which to recognize the identification code contained in the signal generated by the control unit 5. In the preferred embodiment illustrated, more particularly, such recognition means 11 consist in a memory (not shown) containing the identification code of the actuator, and a comparator (not shown) able to read the identification code of the signal received from the control unit 5 and to compare it with that stored in the memory. Whenever the two codes match, the recognition means 11 will enable the actuator 4 to receive the rest of the incoming signal, or in other words, to receive the motion-inducing command.

Since the motion-inducing commands generated by the processing unit 10 are high logic level signals, the device 1 will comprise a management processor 12 connected to the control unit 5 and to each of the actuators 4, through which these same signals are routed. The function of the management processor 12 is to handle the motion-inducing commands in such a manner that they can be executed directly by the actuators 4. In the preferred embodiment illustrated, the unit 12 in question is a programmable logic controller, or PLC.

Each actuator 4 comprises, actuating means 13, to be described in detail further on, such as will execute the motion-inducing signals received from the master control unit 5 by way of the management processor 12.

The single actuator 4 also comprises one or more sensors 14 serving to detect the operating position assumed by the selfsame actuator. The sensors 14 are connected to the master control unit 5, and more exactly to the processing unit 10, so as to establish a feedback loop.

To reiterate, the master control unit 5 is connected to the management processor 12, which connects in turn with each actuator 4 by way of the support table 2, as illustrated in figures 2 and 3. In particular, the connection between the management processor 12 and the actuators can be implemented using two different data network solutions. In a first solution, shown in figure 3, the management processor 12 links all the actuators in parallel one with another via respective connector sockets 15 associated one with each housing 3. In a second solution, not illustrated, the sockets 15 associated with the various housings 3 are connected by the management unit 12 in series. In this instance the housings 3 are normally short-circuited, thereby ensuring that all the actuators 4 are connected even when one or more of the housings may not be in use.

Whichever solution is adopted, the invention advantageously guarantees simultaneous movement of all the actuators 4 when each receives the relative motion-inducing command from the control unit 5, by virtue of the fact that the commands are not executed immediately. Rather, the motion-inducing commands are first sent to all of the actuators, whereupon the control unit 5 generates a further signal serving to activate the commands. The activating signal contains the identification code of all the actuators 4, so that all the actuators receive the activation order at the same instant and will be raised or lowered in concert. This procedure is especially useful in the event of it being necessary to change the distance of the workpiece 100 from the support table 2, or its orientation.

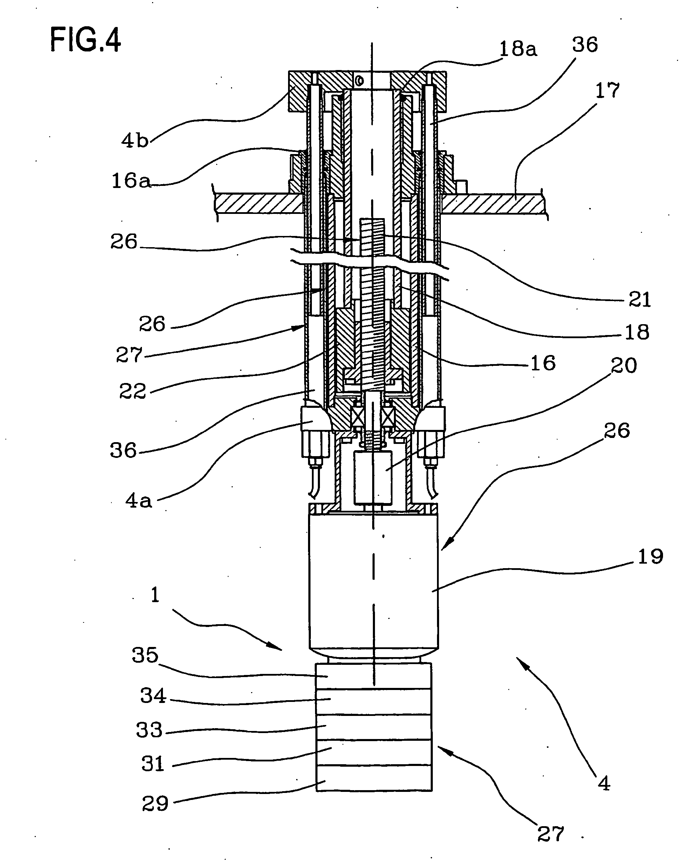

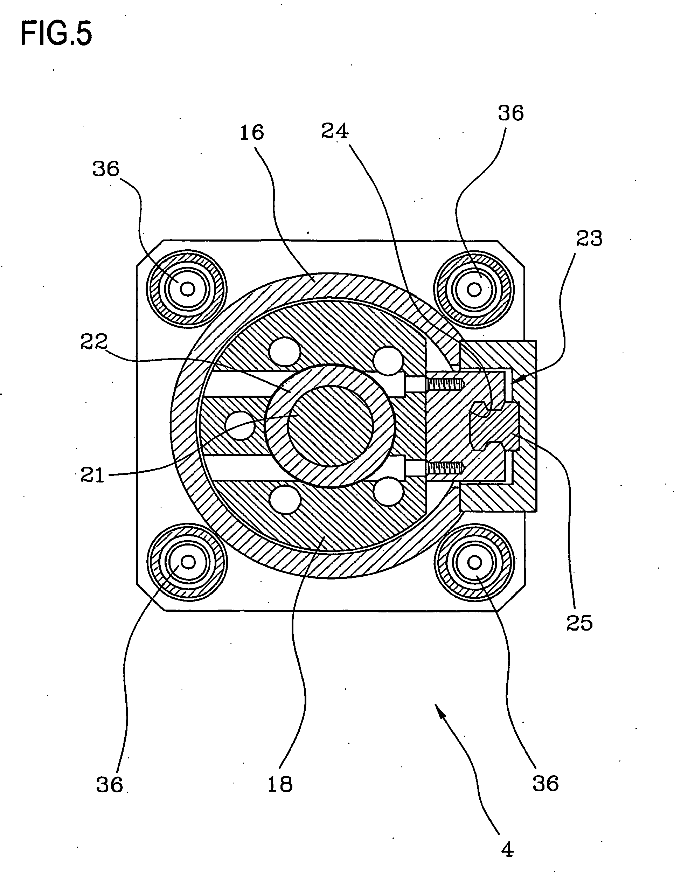

Structurally, as illustrated in figures 4 and 5, each actuator 4 comprises a strut 16 anchored rigidly to the support table 2 by way of a flange 17 at one end 16a of the selfsame strut. Located internally of the strut 16 is a rod 18, extendable telescopically relative to the strut 16. The telescoping movement is induced by an electric motor 19 associated rigidly with the strut 16 and comprising a drive shaft 20 coupled rigidly to a lead screw 21, and preferably a ballscrew. The ballscrew extends parallel with the rod 18 and engages a lead nut 22 coupled rigidly to the rod 18. The rotation of the drive shaft 20 causes the screw 21 to rotate, raising or lowering the lead nut 22 and causing the rod 18 to move through a plurality of operating positions. When in motion, the rod 18 is kept in alignment by a guide denoted 23, illustrated in figure 5. The guide 23 presents a channel 24 extending parallel to and integral with the strut 16, accommodating a track 25 rigidly associated with the rod 18.

The electric motor 19, the drive shaft 20, the ballscrew 21 and the lead nut 22 combine to establish mechanical means 26 forming part of the actuating means 13 aforementioned. Also forming part of these same means are pneumatic means 27 by which the actuator 4 is anchored to the workpiece 100.

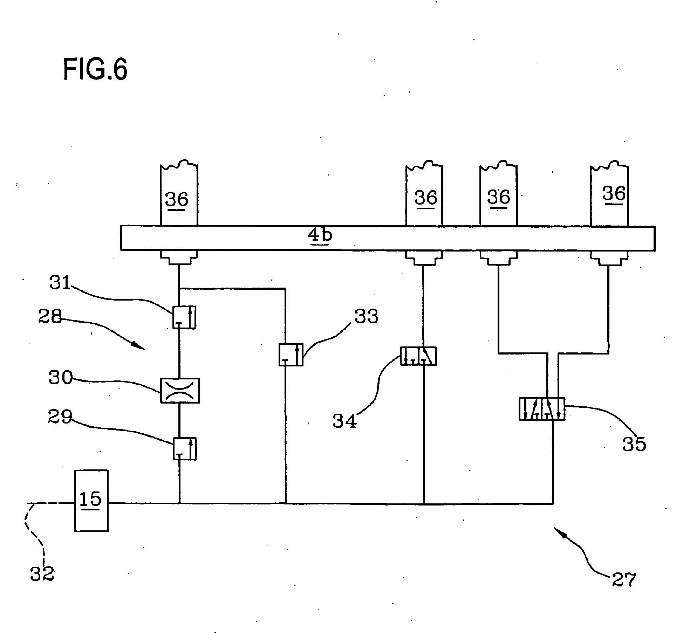

In particular, the pneumatic means 27 in question comprise a suction cup 200, indicated schematically in figures 1 and carried movably by one end 18a of the rod 18 and offered thus in contact to the workpiece 100. In a preferred embodiment, the suction cup 200 will be of the type described in European patent application 06114676.1 filed 30 May 2006 by the present applicant, to which reference can be made for a detailed description of the cup 200 and of the devices essential to its operation. The pneumatic means 27 comprise means 28 by which to generate a vacuum between suction cup 200 and workpiece 100. More exactly, as illustrated in the block diagram of figure 6, such vacuum generating means 28 comprise a first solenoid valve 29 connected on the output side to a Venturi meter 30 connected in turn on the output side to a second solenoid valve 31, which is connected to the suction cup 200. Advantageously, the first solenoid valve 29 is connected to a compressed air line 32 common to all the actuators 4, which are connected physically to the line by way of the aforementioned sockets 15. When the first and second solenoid valves 29 and 31 are opened, the Venturi meter 30 draws air from the suction cup 200, thereby creating a pocket of negative pressure between the cup 200 and the workpiece 100 and securing the workpiece to the actuator 4. Also forming part of the pneumatic means 27 is a third solenoid valve 33, connected likewise to the compressed air line 32, by which air is supplied to the suction cup 200 to nullify the negative pressure when the workpiece 100 needs to be released from the actuator 4.

The pneumatic means 27 further comprise a fourth solenoid valve 34 and a fifth solenoid valve 35, both connected to the compressed air line 32, by which the suction cup 200 is respectively raised and lowered on the end 18a of the rod 18 in such a way that it can be locked in a predetermined position.

In addition, the pneumatic means 27 comprise a plurality of telescopic air ducts 36 connecting the two ends of each actuator, that is to say the moving end 4a, and the fixed end 4b rigidly associated with the support table 2. These telescopic ducts 36, of which there are four in the preferred embodiment illustrated, serve to connect the solenoid valves located at the fixed end 4b of the actuator 4 with the suction cup 200, or with the devices essential to its operation, so that a permanent fluid connection is assured between the valves and the cup.

It will be self-evident from the foregoing that in a device 1 according to the invention, all of the electronics needed to operate the actuator 4 can be installed in the actuator 4 itself, rather than in the support table 2. In addition, all the solenoid valves needed to operate the actuator are mounted to the actuator itself. In short, the support table 2 is simply a "passive" component, neither carrying nor incorporating any control or motion-inducing device associated with the actuators. Thus, advantageously, any fault that might develop will almost certainly be attributable to the malfunction of a component that forms a part of the actuator, and it will therefore be sufficient to remove the faulty actuator to restore normal operation of the device 1, avoiding any need for prolonged stoppages.

In addition, the production costs of the device 1 can be optimized according to the invention since the design does not include any unutilized parts, as is the case conversely in prior art devices where the electronic circuitry required for the operation of the actuators is incorporated into each of the housings.

## Claims

1. A device for numerically controlled multi-axis machine tools for holding workpieces in machining operations, comprising:
- a support table (2) affording a plurality of housings (3);
- a plurality of actuators (4) insertable removably in the housings (3) and pilotable between a plurality of operating positions to the end of supporting a workpiece (100);
- a master control unit (5) by which signals containing a plurality of identification codes and motion-inducing commands are generated and relayed to the support table (2), in such a way that the actuators (4) can be positioned according to the geometry of the workpiece (100); each actuator (4) of the plurality of actuators being associated with one code of the plurality of identification codes and thus directly and selectively in receipt of the motion-inducing commands;
**characterized in that** each actuator (4) is associated with a unique identification code and **in that** the master control unit (5) comprises
a first memory (6) containing a plurality of data sets, each defining a particular workpiece (100), in which each data item represents the operating position to be assumed by an actuator (4) occupying a predetermined housing (3) of the support table (2); and
a second memory (7) containing a conversion table by way of which the identification code of each actuator (4) is associated with the respective housing (3) occupied.

2. A device as in claim 1, wherein the master control unit (5) comprises a processing unit (10) connected operationally to the first memory (6), in such a way that motion-inducing commands are generated according to the data stored in the selfsame first memory, and connected to the second memory (7) in such a way that the identification code of an actuator (4) can be associated with each motion-inducing command generated.

3. A device as in preceding claims, wherein each actuator (4) is equipped with means (11) allowing recognition of the identification code emitted by the master control unit (5) and thereupon enabling reception of the motion-inducing commands.

4. A device as in preceding claims, comprising self-learning means (9) by which the identification code of each actuator (4) is acquired.

5. A device as in claim 4, wherein self-learning means (9) comprise a reader unit (8) able to recognize the identification code of each actuator (4) occupying a housing, and connected to the second memory (7) for the purpose of implementing the conversion table.

6. A device as in preceding claims, wherein each housing (3) comprises a connector socket (15) by way of which the actuator (4) occupying the housing (3) is connected with the master control unit (5).

7. A device as in preceding claims, wherein each actuator (4) comprises actuating means (13) serving to execute the motion-inducing commands received.

8. A device as in claim 2 and claim 7, wherein the motion-inducing commands are handled by a management processor (12) connected operationally to the processing unit (10) and to each actuator (4) in such a way that the motion-inducing commands can be encoded and rendered directly executable by the actuating means (13).

9. A device as in claim 7, wherein the actuating means (13) comprise mechanical means (26) by which the actuator (4) is raised and lowered, and pneumatic means (27) by which the actuator (4) is anchored to the workpiece (100).

10. A device as in claim 9, wherein the mechanical means (26) comprise an electric motor (19) rigidly associated with a strut (16) of the actuator (4) and connected to a lead screw (21) driving a telescopic rod (18) of the actuator (4), in such a way that the rod (18) can be displaced relative to the strut (16).

11. A device as in claim 10, wherein the mechanical means (26) further comprise a lead nut (22) rigidly associated with the rod (18) of the actuator (4) and coupled with the lead screw (21) in such a way that the rod (18) of the actuator is raised and lowered by turning the lead screw (21).

12. A device as in claim 11, wherein each actuator (4) comprises a guide (23) serving to maintain the alignment of the rod (18) when raised and lowered.

13. A device as in claim 9, wherein the pneumatic means (27) comprise a suction cup (200) carried by a movable end (18a) of the telescoping rod (18) of the actuator (4) and positionable thus in contact with the workpiece (100).

14. A device as in claim 13, wherein the pneumatic means (27) comprise means by which to generate a vacuum (28) between the suction cup (200) and the workpiece (100), so that the workpiece can be anchored rigidly to the actuator (4).

15. A device as in claim 13 or 14, wherein the pneumatic means (27) comprise a plurality of telescopic air ducts (36) by which fluid connections are established between the suction cup (200) and a fixed end (4b) of the actuator (4).

16. A device as in claims 13, 14 and 15, wherein the pneumatic means (27) are connected to a single compressed air supply line (32).

17. A device as in claim 6 and claim 16, wherein the single compressed air supply line (32) extends through the support table (2), and the pneumatic means (27) of each actuator (4) are connected to the compressed air line (32) by way of the relative connector socket (15).

18. A method of holding workpieces in machining operations for numerically controlled multi-axis machine tools, including the steps of:
- preparing a support table (2) affording a plurality of housings (3);
- inserting a plurality of actuators (4) in respective housings (3) of the support table (2);
- generating signals containing a plurality of identification codes and of motion-inducing commands addressable to the actuators (4) according to the geometry of the workpiece (100);
- transmitting the signals to the support table (2);
- associating each actuator (4) of the plurality of actuators with one code from the plurality of identification codes, so that the motion-inducing commands can be addressed selectively to the actuators;
**characterized in that**
each actuator (4) is associated with a unique identification code and **in that** said associating step includes the steps of:
- preparing a first memory (6) in which a plurality of data sets are stored, each data set referring to a particular workpiece and defining the operating position that must be assumed by an actuator (4) occupying a given housing (3);
- preparing a second memory (7) containing a conversion table in which the identification code of each actuator (4) is paired with the location of a respective housing (3);
- providing a processing unit (10) connected operationally to the first memory (6) and second memory (7);
said step of generating said signals being made by the processing unit (10) on the basis of said data stored in the first memory (6), said processing unit (10) acceding the second memory (7) to convert the information reflecting the location of the housings (3) into said codes identifying the actuators (4) occupying the housings (3).

19. A method as in claim 18, wherein the step of generating signals includes the step of determining the operating position that must be assumed by each actuator (4) according to the housing (3) occupied, so that motion-inducing commands can be generated accordingly.

20. A method as in claim 19, wherein the step of generating signals includes a step whereby each housing (3) occupied by an actuator (4) is attributed the identification code of the relative actuator.

21. A method as in claims 19 and 20, wherein the step of generating signals includes a step of associating generated motion-inducing commands with respective identification codes of the actuators (4).

22. A method as in claims 19 to 21, wherein the step of transmitting signals to the support table (2) includes a step of encoding the motion-inducing commands to render them directly executable by the actuators (4).

23. A method as in claims 19 to 22, comprising the step of activating all the actuators (4) simultaneously to raise or lower the workpiece.

24. A method as in claim 23, wherein the step of activating all the actuators (4) simultaneously includes the subsidiary steps of transmitting the respective motion-inducing commands selectively to the various actuators (4) and thereupon transmitting a common signal to all the actuators (4) by which the motion-inducing commands are activated.

## Patentansprüche

1. Vorrichtung für numerisch gesteuerte Mehrachsen-Werkzeugmaschinen zum Festhalten von Werkstücken bei Bearbeitungsvorgängen, Folgendes beinhaltend:
- einen Auflagetisch (2), der mehrere Aufnahmen (3) aufweist;
- mehrere Stellantriebe (4), die abnehmbar in die Aufnahmen (3) eingesetzt werden können und so steuerbar sind, dass sie zwischen mehreren Arbeitsstellungen bewegt werden können, um ein Werkstück (100) zu tragen;
- eine Master-Steuereinheit (5), durch die Signale, die mehrere Identifikationscodes und bewegungsauslösende Befehle enthalten, erzeugt und an den Auflagetisch (2) weitergeleitet werden, so dass die Stellantriebe (4) entsprechend der Geometrie des Werkstücks (100) positioniert werden können; wobei jeder Stellantrieb (4) der mehreren Stellantriebe einem Code der mehreren Identifikationscodes zugeordnet ist und somit direkt und selektiv die bewegungsauslösenden Befehle empfangen kann;
**dadurch gekennzeichnet, dass** jeder Stellantrieb (4) einem eindeutigen Identifikationscode zugeordnet ist und dass die Master-Steuereinheit (5) Folgendes beinhaltet:
einen ersten Speicher (6), der mehrere Datensätze enthält, von denen jeder ein bestimmtes Werkstück (100) definiert, in dem jedes Datenelement die Arbeitsstellung darstellt, die ein Stellantrieb (4) einzunehmen hat, der eine vorbestimmte Aufnahme (3) des Auflagetisches (2) belegt; und
einen zweiten Speicher (7), der eine Konvertierungstabelle enthält, durch die der Identifikationscode jedes Stellantriebes (4) der entsprechenden Aufnahme (3) zugeordnet wird, die er belegt.

2. Vorrichtung nach Anspruch 1, worin die Master-Steuereinheit (5) eine Verarbeitungseinheit (10) beinhaltet, die derart mit dem ersten Speicher (6) wirkverbunden ist, dass bewegungsauslösende Befehle entsprechend der in dem ersten Speicher gespeicherten Daten erzeugt werden, und derart mit dem zweiten Speicher (7) verbunden ist, dass der Identifikationscode eines Stellantriebes (4) jedem erzeugten bewegungsauslösenden Befehl zugeordnet werden kann.

3. Vorrichtung nach den vorhergehenden Ansprüchen, worin jeder Stellantrieb (4) mit Einrichtungen (11) ausgerüstet ist, die es ermöglichen, den von der Master-Steuereinheit (5) ausgegebenen Identifikationscode zu erkennen und anschließend den Empfang der bewegungsauslösenden Befehle freizugeben.

4. Vorrichtung nach den vorhergehenden Ansprüchen, die selbstlernende Einrichtungen (9) beinhaltet, durch die der Identifikationscode jedes Stellantriebes (4) erfasst wird.

5. Vorrichtung nach Anspruch 4, worin die selbstlernenden Einrichtungen (9) eine Lesereinheit (8) beinhalten, die in der Lage ist, den Identifikationscode jedes Stellantriebes (4) zu erkennen, der eine Aufnahme belegt, und die mit dem zweiten Speicher (7) verbunden ist, um die Konvertierungstabelle zu implementieren.

6. Vorrichtung nach den vorhergehenden Ansprüchen, worin jede Aufnahme (3) eine Anschlussbuchse (15) beinhaltet, über die der Stellantrieb (4), der die Aufnahme (3) belegt, mit der Master-Steuereinheit (5) verbunden wird.

7. Vorrichtung nach den vorhergehenden Ansprüchen, worin jeder Stellantrieb (4) Betätigungseinrichtungen (13) beinhaltet, die zur Ausführung der empfangenen bewegungsauslösenden Befehle dienen.

8. Vorrichtung nach Anspruch 2 und Anspruch 7, worin die bewegungsauslösenden Befehle durch einen Verwaltungsprozessor (12) gehandhabt werden, der mit der Verarbeitungseinheit (10) und mit jedem Stellantrieb (4) derart wirkverbunden ist, dass die bewegungsauslösenden Befehle kodiert und so aufbereitet werden, dass sie direkt durch die Betätigungseinrichtungen (13) ausführbar sind.

9. Vorrichtung nach Anspruch 7, worin die Betätigungseinrichtungen (13) mechanische Einrichtungen (26) beinhalten, die den Stellantrieb (4) anheben und absenken, sowie pneumatische Einrichtungen (27), mit denen der Stellantrieb (4) an dem Werkstück (100) verankert wird.

10. Vorrichtung nach Anspruch 9, worin die mechanischen Einrichtungen (26) einen elektrischen Motor (19) beinhalten, der einteilig mit einem Schaft (16) des Stellantriebes (4) ausgeführt und mit einer Leitspindel (21) verbunden ist, die eine Teleskopstange (18) des Stellantriebes (4) derart antreibt, dass die Stange (18) relativ zu dem Schaft (16) bewegt werden kann.

11. Vorrichtung nach Anspruch 10, worin die mechanischen Einrichtungen (26) ferner eine Leitmutter (22) beinhalten, die einteilig mit der Stange (18) des Stellantriebes (4) ausgeführt und mit der Leitspindel (21) derart gekoppelt ist, dass die Stange (18) des Stellantriebes durch Drehen der Leitspindel (21) angehoben und abgesenkt wird.

12. Vorrichtung nach Anspruch 11, worin jeder Stellantrieb (4) eine Führung (23) beinhaltet, die dazu dient, die Ausrichtung der Stange (18) beim Anheben und Absenken beizubehalten.

13. Vorrichtung nach Anspruch 9, worin die pneumatischen Einrichtungen (27) einen Saugnapf (200) beinhalten, der von einem beweglichen Ende (18a) der Teleskopstange (18) des Stellantriebes (4) getragen wird und somit in Berührung mit dem Werkstück (100) angeordnet werden kann.

14. Vorrichtung nach Anspruch 13, worin die pneumatischen Einrichtungen (27) Einrichtungen zur Erzeugung eines Vakuums (28) zwischen dem Saugnapf (200) und dem Werkstück (100) beinhalten, so dass das Werkstück fest an dem Stellantrieb (4) verankert werden kann.

15. Vorrichtung nach Anspruch 13 oder 14, worin die pneumatischen Einrichtungen (27) mehrere teleskopische Luftleitungen (36) beinhalten, die zur Herstellung von Fluidverbindungen zwischen dem Saugnapf (200) und einem feststehenden Ende (4b) des Stellantriebes (4) dienen.

16. Vorrichtung nach den Ansprüchen 13, 14 und 15, worin die pneumatischen Einrichtungen (27) mit einer einzigen Druckluftzuleitung (32) verbunden sind.

17. Vorrichtung nach Anspruch 6 und Anspruch 16, worin sich die einzige Druckluftzuleitung (32) durch den Auflagetisch (2) erstreckt und die pneumatischen Einrichtungen (27) jedes Stellantriebes (4) mit der Druckluftleitung (32) über die entsprechende Anschlussbuchse (15) verbunden sind.

18. Verfahren zum Festhalten von Werkstücken bei Bearbeitungsvorgängen für numerisch gesteuerte Mehrachsen-Werkzeugmaschinen, folgende Schritte beinhaltend:
- Vorbereiten eines Auflagetisches (2), der mehrere Aufnahmen (3) aufweist;
- Einsetzen mehrerer Stellantriebe (4) in entsprechende Aufnahmen (3) des Auflagetisches (2);
- Erzeugen von Signalen, die mehrere Identifikationscodes und bewegungsauslösende Befehle enthalten, die entsprechend der Geometrie des Werkstückes (100) an die Stellantriebe (4) adressierbar sind;
- Übertragens der Signale an den Auflagetisch (2);
- Zuordnen jedes Stellantriebes (4) der mehreren Stellantriebe zu einem Code der mehreren Identifikationscodes, so dass die bewegungsauslösenden Befehle selektiv an die Stellantriebe adressiert werden können;
**dadurch gekennzeichnet, dass** jeder Stellantrieb (4) einem eindeutigen Identifikationscode zugeordnet ist und dass der genannte Zuordnungsschritt folgende Schritte beinhaltet:
- Vorbereiten eines ersten Speichers (6), in dem mehrere Datensätze gespeichert sind, wobei jeder Datensatz auf ein bestimmtes Werkstück bezogen ist und die Arbeitsstellung definiert, die ein Stellantrieb (4) einnehmen muss, der eine vorgegebene Aufnahme (3) belegt;
- Vorbereiten eines zweiten Speichers (7), der eine Konvertierungstabelle enthält, in der dem Identifikationscode jedes Stellantriebes (4) die Position einer entsprechenden Aufnahme (3) zugewiesen wird;
- Bereitstellen einer Verarbeitungseinheit (10), die mit dem ersten Speicher (6) und dem zweiten Speicher (7) wirkverbunden ist;
wobei der Schritt des Erzeugens der Signale von der Verarbeitungseinheit (10) auf Grundlage der in dem ersten Speicher (6) gespeicherten Daten ausgeführt wird, wobei die Verarbeitungseinheit (10) auf den zweiten Speicher (7) zugreift, um die Informationen, welche die Position der Aufnahmen (3) wiedergibt, in die Codes zur Identifikation der Stellantriebe (4), die die Aufnahmen (3) belegen, umzuwandeln.

19. Verfahren nach Anspruch 18, worin der Schritt des Erzeugens von Signalen den Schritt der Bestimmung der Arbeitsstellung beinhaltet, die von jedem Stellantrieb (4) entsprechend der belegten Aufnahme (3) eingenommen werden muss, so dass dementsprechend die bewegungsauslösenden Befehle erzeugt werden können.

20. Verfahren nach Anspruch 19, worin der Schritt des Erzeugens von Signalen einen Schritt beinhaltet, bei dem jeder Aufnahme (3), die von einem Stellantrieb (4) belegt ist, der Identifikationscode des entsprechenden Stellantriebes zugewiesen wird.

21. Verfahren nach den Ansprüchen 19 und 20, worin der Schritt des Erzeugens von Signalen einen Schritt der Zuordnung der erzeugten bewegungsauslösenden Befehle zu entsprechenden Identifikationscodes der Stellantriebe (4) beinhaltet.

22. Verfahren nach den Ansprüchen 19 bis 21, worin der Schritt des Übertragens von Signalen an den Auflagetisch (2) einen Schritt des Kodierens der bewegungsauslösenden Befehle beinhaltet, um diese direkt durch die Stellantriebe (4) ausführbar zu machen.

23. Verfahren nach den Ansprüchen 19 bis 22, das den Schritt des gleichzeitigen Aktivierens aller Stellantriebe (4) zum Anheben oder Absenken des Werkstückes beinhaltet.

24. Verfahren nach Anspruch 23, worin der Schritt des gleichzeitigen Aktivierens aller Stellantriebe (4) die Unterschritte des selektiven Übertragens der entsprechenden bewegungsauslösenden Befehle an die verschiedenen Stellantriebe (4) und des anschließenden Übertragens eines gemeinsamen Signals an alle Stellantriebe (4) zur Aktivierung der bewegungsauslösenden Befehle beinhaltet.

## Revendications

1. Un dispositif pour des machines-outils multiaxes à commande numérique pour supporter des pièces à usiner dans des opérations d'usinage, comprenant :
- une table de support (2) présentant une pluralité de logements (3) ;
- une pluralité d'actionneurs (4) pouvant être introduits de façon amovible dans les logements (3) et pouvant être pilotés entre une pluralité de positions opérationnelles afin de supporter une pièce à usiner (100) ;
- une unité de contrôle maître (5) destinée à générer et à envoyer à la table de support (2) des signaux contenant une pluralité de codes d'identification et de commandes d'entraînement, de manière à ce que les actionneurs (4) puissent être positionnés en fonction de la géométrie de la pièce à usiner (100) ; chaque actionneur (4) de ladite pluralité d'actionneurs étant associé à un code de ladite pluralité de codes d'identification et recevant ainsi, directement et sélectivement, les commandes d'entraînement ;
ledit dispositif étant **caractérisé en ce que** chaque actionneur (4) est associé à un code d'identification unique et **en ce que** l'unité de contrôle maître (5) comprend
une première mémoire (6) contenant une pluralité de séries de données, définissant chacune une pièce à usiner (100) particulière, dans lesquelles chaque donnée représente la position opérationnelle devant être prise par un actionneur (4) occupant un logement (3) prédéfini de la table de support (2) ; et
une deuxième mémoire (7) contenant une table de conversion par l'intermédiaire de laquelle le code d'identification de chaque actionneur (4) est associé au logement (3) respectif qu'il occupe.

2. Le dispositif selon la revendication 1, **caractérisé en ce que** l'unité de contrôle maître (5) comprend une unité de traitement (10) opérationnellement reliée à la première mémoire (6), de manière à générer des commandes d'entraînement en fonction des données mémorisées dans cette même première mémoire, et reliée à la deuxième mémoire (7) de manière à ce que le code d'identification d'un actionneur (4) puisse être associé à chaque commande d'entraînement générée.

3. Le dispositif selon les revendications précédentes, **caractérisé en ce que** chaque actionneur (4) est équipé de moyens (11) destinés à reconnaître le code d'identification émis par l'unité de contrôle maître (5) et à activer ensuite la réception des commandes d'entraînement.

4. Le dispositif selon les revendications précédentes, **caractérisé en ce qu'**il comprend des moyens d'auto-apprentissage (9) destinés à acquérir le code d'identification de chaque actionneur (4).

5. Le dispositif selon la revendication 4, **caractérisé en ce que** les moyens d'auto-apprentissage (9) comprennent une unité de lecture (8) à même de reconnaître le code d'identification de chaque actionneur (4) occupant un logement, et reliée à la deuxième mémoire (7) pour l'implémentation de la table de conversion.

6. Le dispositif selon les revendications précédentes, **caractérisé en ce que** chaque logement (3) comprend une embase de connecteur (15) par l'intermédiaire de laquelle l'actionneur (4) occupant le logement (3) est connecté à l'unité de contrôle maître (5).

7. Le dispositif selon les revendications précédentes, **caractérisé en ce que** chaque actionneur (4) comprend des moyens d'actionnement (13) servant à exécuter les commandes d'entraînement reçues.

8. Le dispositif selon la revendication 2 et la revendication 7, **caractérisé en ce que** les commandes d'entraînement sont gérées par un processeur de gestion (12) opérationnellement relié à l'unité de traitement (10) et à chaque actionneur (4) de manière à ce que les commandes d'entraînement puissent être encodées et rendues directement exécutables par les moyens d'actionnement (13).

9. Le dispositif selon la revendication 7, **caractérisé en ce que** les moyens d'actionnement (13) comprennent des moyens mécaniques (26) destinés à soulever et à abaisser l'actionneur (4), et des moyens pneumatiques (27) destinés à assujettir l'actionneur (4) à la pièce à usiner (100).

10. Le dispositif selon la revendication 9, **caractérisé en ce que** les moyens mécaniques (26) comprennent un moteur électrique (19) associé de façon rigide à une jambe (16) de l'actionneur (4) et relié à une vis-mère (21) entraînant une tige télescopique (18) de l'actionneur (4), de manière à ce que ladite tige (18) puisse être déplacée par rapport à ladite jambe (16).

11. Le dispositif selon la revendication 10, **caractérisé en ce que** les moyens mécaniques (26) comprennent en outre un écrou (22) associé de façon rigide à la tige (18) de l'actionneur (4) et accouplé avec la vis-mère (21) de manière à ce que ladite tige (18) de l'actionneur soit soulevée et abaissée par rotation de ladite vis-mère (21).

12. Le dispositif selon la revendication 11, **caractérisé en ce que** chaque actionneur (4) comprend un guide (23) servant à maintenir l'alignement de la tige (18) quand celle-ci est soulevée et abaissée.

13. Le dispositif selon la revendication 9, **caractérisé en ce que** les moyens pneumatiques (27) comprennent une ventouse (200) supportée par une extrémité mobile (18a) de la tige télescopique (18) de l'actionneur (4) et pouvant ainsi être mise en contact avec la pièce à usiner (100).

14. Le dispositif selon la revendication 13, **caractérisé en ce que** les moyens pneumatiques (27) comprennent des moyens (28) destinés à générer un vide entre la ventouse (200) et la pièce à usiner (100) de manière à ce que ladite pièce à usiner puisse être assujettie de façon rigide à l'actionneur (4).

15. Le dispositif selon la revendication 13 ou 14, **caractérisé en ce que** les moyens pneumatiques (27) comprennent une pluralité de conduits d'air (36) télescopiques destinés à établir des connexions fluides entre la ventouse (200) et une extrémité fixe (4b) de l'actionneur (4).

16. Le dispositif selon les revendications 13, 14 et 15, **caractérisé en ce que** les moyens pneumatiques (27) sont raccordés à une seule ligne (32) d'alimentation en air comprimé.

17. Le dispositif selon la revendication 6 et la revendication 16, **caractérisé en ce que** ladite seule ligne (32) d'alimentation en air comprimé s'étend à travers la table de support (2), et les moyens pneumatiques (27) de chaque actionneur (4) sont raccordés à la ligne (32) d'air comprimé par l'intermédiaire de l'embase de connecteur (15) respectif.

18. Un procédé pour supporter des pièces à usiner dans des opérations d'usinage pour des machines-outils multiaxes à commande numérique, comprenant les phases consistant à :
- préparer une table de support (2) présentant une pluralité de logements (3) ;
- introduire une pluralité d'actionneurs (4) dans des logements (3) respectifs de la table de support (2) ;
- générer des signaux contenant une pluralité de codes d'identification et de commandes d'entraînement pouvant être envoyées aux actionneurs (4) en fonction de la géométrie de la pièce à usiner (100) ;
- transmettre les signaux à la table de support (2) ;
- associer chaque actionneur (4) de ladite pluralité d'actionneurs à un code de ladite pluralité de codes d'identification, de manière à ce que les commandes d'entraînement puissent être envoyées sélectivement aux actionneurs ;
ledit procédé étant **caractérisé en ce que** chaque actionneur (4) est associé à un code d'identification unique et **en ce que** ladite phase d'association comprend les phases consistant à :
- préparer une première mémoire (6) dans laquelle est mémorisée une pluralité de séries de données, chaque série de données se référant à une pièce à usiner particulière et définissant la position opérationnelle devant être prise par un actionneur (4) occupant un logement (3) donné ;
- préparer une deuxième mémoire (7) contenant une table de conversion dans laquelle le code d'identification de chaque actionneur (4) est apparié avec l'emplacement d'un logement (3) respectif ;
- prévoir une unité de traitement (10) opérationnellement reliée à la première mémoire (6) et à la deuxième mémoire (7) ;
ladite phase de génération desdits signaux étant effectuée par l'unité de traitement (10) sur la base desdites données mémorisées dans la première mémoire (6), ladite unité de traitement (10) accédant à la deuxième mémoire (7) pour convertir les informations relatives à l'emplacement des logements (3) en ces mêmes codes identifiant les actionneurs (4) occupant les logements (3).

19. Le procédé selon la revendication 18, **caractérisé en ce que** la phase de génération des signaux comprend la phase consistant à déterminer la position opérationnelle devant être prise par chaque actionneur (4) en fonction du logement (3) occupé, de manière à ce que les commandes d'entraînement puissent être générées en conséquence.

20. Le procédé selon la revendication 19, **caractérisé en ce que** la phase de génération des signaux comprend une phase par l'intermédiaire de laquelle chaque logement (3) occupé par un actionneur (4) reçoit le code d'identification de l'actionneur correspondant.

21. Le procédé selon les revendications 19 et 20, **caractérisé en ce que** la phase de génération des signaux comprend une phase consistant à associer les commandes d'entraînement générées à des codes respectifs d'identification des actionneurs (4).

22. Le procédé selon les revendications de 19 à 21, **caractérisé en ce que** la phase de transmission des signaux à la table de support (2) comprend une phase consistant à encoder les commandes d'entraînement pour les rendre directement exécutables par les actionneurs (4).

23. Le procédé selon les revendications de 19 à 22, **caractérisé en ce qu'**il comprend la phase consistant à activer simultanément tous les actionneurs (4) pour soulever ou abaisser la pièce à usiner.

24. Le procédé selon la revendication 23, **caractérisé en ce que** la phase d'activation simultanée de tous les actionneurs (4) comprend les phases auxiliaires consistant à envoyer sélectivement les commandes d'entraînement respectives aux différents actionneurs (4) puis à envoyer un signal commun à tous les actionneurs (4) pour l'activation des commandes d'entraînement.
